# EUROPÄISCHE PATENTANMELDUNG

(11) **EP 1 464 987 A2**
(43) Veröffentlichungstag der Anmeldung: **06.10.2004**
(21) Anmeldenummer: 04014130.1
(22) Anmeldetag: 26.06.2001
(51) Int. Cl.: G01S 13/76, G01S 13/02

(54) **Vorrichtung zur Erzeugung eines Oszillatorsignals**

(30) Priorität: 06.07.2000 DE 10032822
(62) Teilanmeldung aus: 01984082.6
(71) Anmelder: SIEMENS AKTIENGESELLSCHAFT, 80333 München (DE)
(72) Erfinder: Heide, Patric, Dr., 85591 Vaterstetten (DE); Nalezinski, Martin, Dr., 81541 München (DE); Roskosch, Richard, 85521 Ottobrunn (DE); Vossiek, Martin, Prof., 31139 Hildesheim (DE)

(57) **Zusammenfassung**

Die Erfindung betrifft eine Anordnung zur Erzeugung eines Oszillatorsignals basierend auf einem Basissignal, wobei das Oszillatorsignal durch einen Oszillator aktiv konstruiert wird. Der Oszillator lässt sich durch das Basissignal quasiphasenkohärent anregen.

## Beschreibung

Die Erfindung betrifft eine Anordnung nach dem Oberbegriff des Anspruchs 1.

Im Bereich der Hochfrequenztechnik ist es vorteilhaft und üblich, hochfrequente Mikrowellensignale nicht direkt, sondern in Relation zu einem Vergleichs- bzw. Bezugssignal auszuwerten. Dies betrifft etwa Systeme zur Datenübertragung, bei denen ein Sender, der im folgenden Basisstation genannt wird, ein Basissignal sendet und dieses Basissignal in einer Empfangsstation mit einem Vergleichssignal, das im Empfänger generiert wird, verglichen bzw. weiterverarbeitet wird. Häufig werden so z.B. Mischer oder Demodulatoren eingesetzt, mit denen das empfangene Signal mit einem Vergleichssignal in ein zumeist niederfrequenteres Band heruntergesetzt wird. Da das hochfrequente Basissignal in aller Regel nur als Träger dient, dem eine niederfrequentere Modulation bzw. Information aufgeprägt ist, kann zum Beispiel durch diese Umsetzung der Träger unterdrückt und somit einfacher auf die in der Modulation enthaltene Information geschlossen werden.

Bei sogenannten Transponder-, Transceiver-, Backscatter- oder auch Radarsystemen wird von der Basisstation ein Basissignal, das in diesem Fall auch Abfragesignal genannt wird, zum Transponder bzw. zu einem Reflektor gesendet und von hier aus, gegebenenfalls modifiziert, als Antwortsignal zurück zur Basisstation übertragen und dort wiederum empfangen. Die Auswertung in der Basisstation geschieht dann zumeist in der Art, dass das gesendete Basissignal selbst als Vergleichssignal dient, mit dem das Antwortsignal ausgewertet wird, um so auf eine zum Beispiel im Transponder beaufschlagte Information oder eine Sensorinformation, wie z.B. die Laufzeit des Signals und somit auf die Länge der Übertragungsstrecke, zu schließen.

Üblich ist es bei solchen Systemen auch, dass im Transponder das empfangene Basissignal ebenfalls mit einem Vergleichssignal verarbeitet wird, bevor ein Antwortsignal zurückgesendet wird, bzw. das Vergleichssignal selbst, gegebenenfalls mit einer charakteristischen Information beaufschlagt, zurück zur Basisstation gesendet wird. Derartige Transponder mit einer eigenen Quelle zum Zurücksenden der Antwort, werden im folgenden als aktive Transponder bzw. aktive Backscatter bezeichnet. Demgegenüber werden Systeme ohne eigene Quelle, also solche die das Basissignal nur, gegebenenfalls modifiziert und verstärkt, zurücksenden, als passiv bezeichnet.

Vorteilhaft ist es in allen Fällen, wenn das Vergleichssignal einen möglichst exakten Bezug bezüglich Frequenz und Phase zum Basissignal bzw. zu dessen Träger besitzt. Je exakter dieser Frequenz- und Phasenbezug ist, desto einfacher und/oder störsicherer kann auf die im Basissignal bzw. im Antwortsignal enthaltenen Informationen geschlossen werden. Wird das Basissignal von einer Basisstation gesendet und in einer räumlich entfernten Empfangsstation in der beschriebenen Art und Weise empfangen und weiterverarbeitet, so ist dieser gewünschte Frequenz- und Phasenbezug nicht ohne Weiteres gegeben, da beide Signale, also das in der Basisstation generierte Basissignal und das in der Empfangsstation generierte Vergleichssignal, aus unterschiedlichen Quellen stammen.

Aus den genannten Gründen ist es daher von generellem Interesse, das Vergleichssignal in irgendeiner Weise an das Basissignal anzukoppeln. Zu diesem Zweck sind unterschiedliche Verfahren und Anordnungen üblich. Ein einfacher Frequenzbezug kann realisiert werden, indem im Sender und im Empfänger Oszillatoren mit hoher Frequenzstabilität verwendet werden. Durch zum Beispiel Temperatur- oder Alterungsdriften bleibt hier jedoch immer ein unbekannter Restfrequenzversatz. Aus diesem Grund können die Phasen der beiden Quellen in keinem festen Bezug stehen. Aufwendigere Anordnungen besitzen Mittel, die geeignet sind, den Restfrequenzversatz und/oder den Restphasenversatz zu bestimmen. Basierend auf den bestimmten Abweichungsgrößen kann dann die Basissignalquelle oder die Vergleichssignalquelle gesteuert oder geregelt werden. Hierzu werden unterschiedliche Frequenz- und Phasenregelschleifen eingesetzt. Ebenso können aus den Restsignalen zusätzliche Abfragesignale bzw. -größen gebildet werden, die zur weiteren Signalverarbeitung herangezogen werden. Im Bereich der Kommunikationstechnik sind vielfältige Verfahren zu einer Trägerrückgewinnung gebräuchlich. Ebenfalls Stand der Technik ist die Synchronisation von Oszillatoren mittels sogenanntem "Injection Locking", siehe zum Beispiel M. Wollitzer, J. Buechler und E. Bibbl, "Supramonic Injection Locking Slot Oszillators", Electronics Letters, 1993, Vol. 29, Nr. 22, Seiten 1958 bis 1959. Hierbei wird zumeist der zu regelnde Oszillator auf einen starken, stabilen Oszillator eingelogt. Die Anbindung erfolgt üblicherweise im CW-Betrieb (Continuous Wave-Betrieb), wobei auch subharmonische Schwingungsmoden zur Anwendung genutzt werden können. Generell wird eine Regelung der Bezugsquelle basierend auf einem Abfragesignal insbesondere dann störanfällig bzw. kompliziert, wenn die empfangende Station nicht nur als reiner Empfänger arbeitet, sondern als Transponder, Transceiver oder als aktiver Backscatter das Abfragesignal, gegebenenfalls mit einer zusätzlichen Information versehen, als Antwortsignal zurücksendet. In diesem Fall ist durch sogenannte Multiplexverfahren dafür zu sorgen, dass das Antwortsignal, das in aller Regel eine signifikant höhere Amplitude aufweist als das Abfragesignal, nicht auf den Empfangszweig und/oder auf die Regelschleife überkoppelt. Üblich sind zum Beispiel Zeit-, Frequenz- oder Polarisations-Multiplexverfahren. Beim Zeitmultiplex wird auf das Abfragesignal erst mit einem Zeitversatz geantwortet. Je größer der Zeitversatz und/oder je höher die Mikrowellenfrequenz ist, desto komplizierter ist es, eine Phasenkohärenz zwischen der Quelle der Basisstation und der des Transponders zu halten. Auch extrem kleine relative Frequenzabweichungen der Quellen, die aufgrund von Drifteffekten, Phasenrauschen und Regelungenauigkeiten nicht zu vermeiden sind, führen bei sehr hochfrequenten Signalen in relativ kurzer Zeit zu einem undefinierten Phasenverhältnis der Quellen. Beim Frequenzmultiplex wird das Abfragesignal im Transponder auf eine andere Frequenz umgesetzt, bevor es zurückgesendet wird. Hierzu sind Teiler, Vervielfacher oder zusätzliche Signalquellen und Mischer und gegebenenfalls mehrere Antennen erforderlich, die auf die jeweiligen Frequenzen abgestimmt sind. Das Prinzip der Frequenzvervielfachung bzw. -teilung scheitert in der Praxis zudem häufig an der funktechnischen Zulassung, da die Frequenzen der freigegebenen Bänder in aller Regel nicht in einem ganzzahligen Teilungsverhältnis stehen.

Soll die Entfernung oder eine Entfernungsänderung zwischen einer Basisstation und einem Transponder bestimmt werden, etwa nach dem Prinzip des Doppler- oder des Frequenzmodulationsradars, so besteht eine noch weitergehende Anforderungen an den Phasenbezug zwischen dem gesendeten Abfragesignal und dem zurückgesendeten Antwortsignal. In diesem Fall muss die Phase des vom Transponder zurückgesendeten Antwortsignals, gegebenenfalls bis auf einen konstanten Offset, exakt der Phase des im Transponder empfangenen Signals entsprechend, so dass das von der Basisstation gesendete Abfragesignal und das von ihr nach Rücksendung durch den Transponder empfangene Antwortsignal eine Phasendifferenz besitzen, die proportional zur Entfernung zwischen Basisstation und Transponder ist, die sich aber ansonsten zeitlich nicht ändert.

Da diese Phasenkohärenz zweier Hochfrequenzquellen in der Praxis nur sehr schwer zu realisieren ist, werden heutzutage meistens passive Backscatter-Transponder verwendet, die über keine eigenen Signalquellen verfügen, sondern das Abfragesignal lediglich, gegebenenfalls verstärkt, zurückspiegeln. Solche Systeme sind zum Beispiel in Klaus Finkenzeller "RFID-Handbuch", 2. Auflage, Carl Hanser Verlag, München, 1999, beschrieben. Nachteilig ist bei derartigen passiven Backscattersystemen, dass das gesendete Signal den Weg von der Basisstation zum Transponder als Abfragesignal hin- und als Antwortsignal zurücklaufen muss und daher das Signal-Rausch-Verhältnis der gesamten Übertragungsstrecke proportional zur vierten Potenz der Entfernung abnimmt. Wegen der mit der Frequenz stark ansteigenden Freifelddämpfung lassen sich insbesondere sehr hochfrequente passive Backscatter-Transponder im Gigahertz-Bereich kaum mit einem befriedigenden Signal-Rausch-Verhältnis realisieren. Dies ist insbesondere deswegen unbefriedigend, da im Prinzip Gigahertz-Systeme wegen der hohen verfügbaren Bandbreite sowohl zur Entfernungsmessung als auch zu schnellen Datenübertragungen sehr vorteilhaft einsetzbar wären.

Daneben existieren Systeme, bei denen das Basissignal nicht einfach zurückgespiegelt und dabei eventuell noch verstärkt wird, sondern bei dem das Antwortsignal basierend auf dem Basissignal, z.B. durch einen aktiven Oszillator, aktiv konstruiert wird. Für die aktive Konstruktion werden die relevanten Parameter aus dem Basissignal extrahiert und das Oszillatorsignal wird, basierend auf den extrahierten Parametern, eigenständig erzeugt. Es stellt insofern eine Rekonstruktion des Basissignals dar, als es mit ihm in den gewünschten Parametern übereinstimmt. Über die bloße Rekonstruktion hinaus können dem Oszillatorsignal auch noch weitere Signalkomponenten aufgeprägt werden, um z.B. zusätzliche Informationen zu übertragen.

Wird im Transponder auf diese Weise mit einem aktiven Oszillator als eigener Quelle basierend auf einem empfangenen Signal ein neues Signal generiert, so wird der Weg von der Basisstation zum Transponder von dem Signal einer Quelle jeweils nur einmal durchlaufen. In diesem Fall ist das Signal-Rausch-Verhältnis nur umgekehrt proportional zur zweiten Potenz der Entfernung. Hinzu kommt, dass auch sonstige Dämpfungen und Verluste auf dem Übertragungsweg nur einmal und nicht zweimal auf das Signal einwirken. Daher ist, insbesondere bei größeren Entfernungen und/oder hohen Frequenzen, das Signal-Rausch-Verhältnis um Größenordnungen besser als bei passiven Backscattersystemen, bei denen das Signal den Weg von der Basisstation zum Transponder hin und zurück überwinden muss.

Ein komplexeres Transpondersystem, bei dem der Transponder-Backscatter mit einer eigenen Quelle arbeitet, ist in der deutschen Patentanmeldung 19946168.6 ausgeführt. Dieses System arbeitet im Zeitmultiplex und umgeht einige der dargestellten Nachteile durch ein geschickte Wahl der Modulation und Regelung. Es ist jedoch relativ aufwendig. Verwandt hierzu sind die Verfahren, die bei GPS (Global Positioning System) verwendet werden. Andere Systeme werden zum Beispiel in US 5,453,748 oder in C. Luxey, J.-M. Laheurte "A Retrodirective Transponder with Polarization Duplexing for Dedicated short-range Communications", IEEE Transactions on Microwaves Theory and Technics, Vol. 47, Nr. 9, Seiten 1910 bis 1915, oder in M. M. Kaleja et al., "Imaging RFID System at 24 Gigahertz for Object Localization, 1999 IEEE MTT-S International Microwave Symposium, Anna Hein, USA, Vol. 4, Seiten 1497 bis 1500, genannt.

Aufgabe der Erfindung ist es, ein besonders einfaches Verfahren aufzuzeigen, mit dem es möglich ist, eine Signalquelle im Hochfrequenzbereich quasiphasenkohärent an ein Vergleichssignal anzubinden. Quasiphasenkohärent heißt dabei, dass die Phasendifferenz zwischen dem Basissignal und dem erzeugten Vergleichssignal klein ist, wobei der Begriff klein in Bezug zur beabsichtigten Kommunikations- bzw. Messaufgabe zu sehen ist. Als Grenze für eine kleine Phasenabweichung wird zum Beispiel häufig der Wert π/10, also ca. 20° verwendet. Solche Signale mit nur kleinen Phasenabweichungen werden im Folgenden quasiphasenkohärent bezeichnet und die Zeitspanne, in der diese Kohärenz besteht, als Kohärenzzeitlänge.

Die genannte Aufgabe wird durch eine Anordnung mit den Merkmalen des Anspruchs 1 gelöst.

Wesentlich ist hierbei, dass nicht nur die Oszillationen des aktiven Oszillators quasiphasenkohärent zum Basissignal sind, sondern bereits die Anregung des aktiven Oszillators geschieht quasiphasenkohärent. Während bei Vorrichtungen und Verfahren nach dem Stand der Technik das Anregen des aktiven Oszillators durch thermisches Rauschen erfolgt, und seine Oszillationen erst später durch einen aufwendigen Regelprozess und ein Lock-In quasiphasenkohärent gemacht werden, wird beim Gegenstand der Anmeldung der Oszillator durch das Basissignal bereits quasiphasenkohärent angeregt, das heißt, er schwingt bereits quasiphasenkohärent an, und es wird damit gleichsam automatisch die Phasenkohärenz hergestellt. Die Schwingung des Oszillators ist somit quasiphasenkohärent initialisierbar bzw. wird quasiphasenkohärent initialisiert.

Die Grundidee der Erfindung besteht darin, dass ein Oszillator sich im Grundzustand in einem labilen Gleichgewicht befindet, und, wenn er eingeschaltet wird, durch eine wie auch immer geartete Fremdenergiezufuhr erst dazu angeregt werden muss zu schwingen. Erst nach diesem initialen Anstoßen wird die Rückkopplung aktiv, mit der die Schwingung aufrechterhalten wird. Üblicherweise wird zum Beispiel das thermische Rauschen zu einer solchen Initialisierung eines Schwingkreises verwendet. Das heißt, dass ein Oszillator mit einer zufälligen Phase und Amplitude anschwingt und dann bei seiner durch seinen Resonanzkreis vorgegebenen Frequenz oszilliert. Wird in den Oszillator beim Einschalten jedoch ein externes Anregungssignal injiziert, dessen Frequenz in der Bandbreite des Resonanzkreises liegt und dessen Leistung nennenswert oberhalb der Rauschleistung liegt, so schwingt der Oszillator nicht zufällig, sondern synchron mit der Phase des anregenden Basissignals an. Je nach Frequenzdifferenz zwischen dem anregenden Basissignal und dem Oszillatorsignal und in Abhängigkeit vom Phasenrauschen der beiden Oszillatoren bleibt diese Quasiphasenkohärenz zumindest eine Zeit lang bestehen.

Der Unterschied der vorliegenden Erfindung zu den bekannten passiven Vorrichtungen und Verfahren besteht in der Verwendung eines aktiven Oszillators. So wird das Basissignal nicht einfach zurückgespiegelt, sondern es wird vor dem Zurücksenden mit einer eigenen quasiphasenkohärenten Quelle nahezu rauschfrei ein Oszillatorsignal aktiv konstruiert. Das erfindungsgemäße System hat bei sonst ähnlicher Funktion daher eine signifikant höhere Rechweite als passive Systeme nach dem Stand der Technik.

Das Oszillatorsignal des aktiven Oszillators kann als Antwortsignal oder Vergleichssignal dienen, je nachdem, ob es sich um eine uni- oder bidirektionale Signalüberragung handelt.

Weiterhin kann auf Regelkreise für eine etwaige Trägerrückgewinnung bei der erfindungsgemäßen Vorrichtung verzichtet werden. Ein besonderer Vorteil besteht bei Transponderanordnungen darin, dass keinerlei Zeit-, Frequenzoder Polarisationsmultiplex notwendig ist, da sich das Basisund Oszillatorsignal nicht beeinflussen, bzw. nur zu Beginn des Einschwingvorganges in gewünschter Art und Weise beeinflussen und danach unabhängig voneinander quasiphasenkohärent sind.

Die Vorrichtung weist ein Schaltmittel zum Schalten der quasiphasenkohärenten Anregbarkeit des aktiven Oszillators auf. Dieses Schaltmittel dient dazu, den aktiven Oszillator in einen Zustand zu versetzen, aus dem er, durch das Basissignal angeregt, quasiphasenkohärent zu dem Basissignal anschwingen kann.

Für ein Schalten der Anregbarkeit müssen nicht unbedingt die Oszillationen komplett ein- und ausgeschaltet werden. Wenn zum Beispiel der aktive Oszillator mit unterschiedlichen Moden schwingen kann, kann einfach ein zweiter Mode geschaltet werden, während die erste weiterschwingt. Auch bei nur einem Mode muss die Oszillation nicht vollständig abgeschaltet werden, sondern es reicht in der Regel eine Dämpfung, so dass das Basissignal zur nächsten quasiphasenkohärenten Anregung ausreicht.

Wird die Anregbarkeit des aktiven Oszillators nach der Kohärenzzeitlänge erneut eingeschaltet, so bleibt die Quasiphasenkohärenz über einen längeren Zeitraum bestehen.

Die quasiphasenkohärente Anregbarkeit des aktiven Oszillators wird wiederholt, damit die Quasiphasenkohärenz auch über längere Zeiträume bestehen bleibt. Dies wird dadurch erreicht, dass das Schaltmittel so ausgebildet ist, dass es den aktiven Oszillator mit einer vorgegebenen Folge schaltet. Diese Folge kann eine komplexe Folge sein, die für sich Träger von Informationen ist, oder auch eine zyklische Wiederholung in Form einer Taktrate.

Vorzugsweise entspricht die Dauer zwischen aufeinanderfolgendem Schalten der Anregbarkeit in etwa der Kohärenzzeitlänge. Es ist aber auch ein schnelleres Schalten möglich, ohne dass die Quasikohärenz zwischen Basis- und Oszillatorsignal verloren geht. Wenn andererseits die Quasiphasenkohärenz nur in bestimmten Zeitabschnitten notwendig ist, kann die Dauer zwischen zwei aufeinanderfolgenden Einschaltvorgängen der Anregbarkeit auch länger gewählt werden als die Kohärenzzeitlänge. Bei einer zyklischen Folge in Form eines Taktes sind entsprechend die Zyklen der Kohärenzzeitlänge anzupassen.

Wird das Schalten des aktiven Oszillators wiederholt und schwingt der aktive Oszillator wiederholt quasiphasenkohärent zum Basissignal an, so kann das vom aktiven Oszillator erzeugte Oszillatorsignal als ein abgetastetes Duplikat des Basissignals aufgefasst werden. Bei Einhaltung des Abtasttheorems ist ein Signal vollständig durch seine Abtastwerte beschrieben. Sinnvollerweise ist die Ausschaltzeitdauer des aktiven Oszillators nicht deutlich länger als die Einschaltzeitdauer, also nicht deutlich länger als die Kohärenzzeitlänge. Die Einhaltung des Abtasttheorems ergibt sich daher wegen der Kohärenzbedingung immanent. Laut Abtasttheorem muss die Phasendifferenz zwischen zwei Abtastpunkten kleiner als 180° sein. Diese Bedingung ist weniger restriktiv als die Quasikohärenzbedingung. In Konsequenz ist aus informationstechnischer Sicht das Signal des geschalteten Oszillators, trotz des Schaltvorganges, als ein Abbild des Vergleichssignals anzusehen bzw. trägt dessen vollständige Information.

Die Anregbarkeit des aktiven Oszillators lässt sich relativ einfach schalten, indem der Oszillator selbst geschaltet wird. Entsprechend kann die Vorrichtung ein Mittel zum Einund Ausschalten des aktiven Oszillators aufweisen. Zum Schalten des Oszillators ist jegliches Mittel geeignet, das bewirkt, dass die Schwingbedingung des Oszillators gegeben bzw. nicht mehr gegeben ist. So kann z.B. im Schwingkreis die Verstärkung abgeschaltet, Dämpfungen oder Laufzeiten (Phasen) verändert oder der Rückkoppelzweig aufgetrennt werden.

Der aktiven Oszillator kann außer auf seinem Grundmode auch quasiphasenkohärent auf einem seiner subharmonischen Schwingungsmoden angeregt werden. Zur Anregung kann dabei der Grundmode oder ein subharmonischer Schwingungsmode des Basissignals dienen.

Wird die Vorrichtung zur Identifikation als ID-Tag oder zur Kommunikation verwendet, so kann die Codierung zum Beispiel durch die Folge des Schaltens der Anregbarkeit des Oszillators erfolgen, insbesondere indem das Schaltmittel eine Taktrate entsprechend der gewünschten Kodierung aufweist. Alternativ weist die Vorrichtung eine zusätzliche Modulationseinheit auf, mit der das quasiphasenkohärente Signal vor dem Zurücksenden moduliert wird.

Wie bereits dargelegt wurde, ist die Kohärenzzeitlänge von der Frequenzdifferenz zwischen Basis- und Oszillatorsignal abhängig. Je genauer die Frequenzen übereinstimmen, desto länger sind die Phasen der Signale nahezu gleich. Um die Kohärenzzeitlänge zu vergrößern, wodurch auch die Taktrate des Schaltmittels gering gehalten werden kann, kann es vorteilhaft sein, Mittel vorzusehen, die dazu geeignet sind, die Oszillatorfrequenz adaptiv an die Frequenz des Basissignals anzupassen.

Bei der Wahl des aktiven Oszillators ist zu beachten, dass seine Einschwingzeit klein gegenüber der Kohärenzzeitlänge ist. Die Güte des Oszillators sollte daher nicht zu groß gewählt werden. Die Güte sollte allerdings auch nicht zu gering gehalten werden, da Oszillatoren mit geringer Güte üblicherweise in hohes Phasenrauschen aufweisen.

Bei einer Anordnung mit einer Vorrichtung zur Erzeugung eines Oszillatorsignals und mit einer Basisstation, in der das Basissignal erzeugt und von der es zur Vorrichtung gesendet wird, kann das Oszillatorsignal von der Vorrichtung als Antwortsignal auf das Basissignal zurück zur Basisstation gesendet werden.

In einer Anordnung, in der die Vorrichtung über Basis- und Oszillatorsignale als Abfrage- und Antwortsignale mit einer Basisstation kommuniziert, weist die Basisstation vorzugsweise ein Bandpassfilter auf, dessen Mittenfrequenz in etwa der Taktrate des Schaltmittels entspricht, und/oder Mittel, um den Einfluss der Taktrate zu eliminieren. Solche Mittel können ein zusätzlicher Mischer oder ein Gleichrichter und ein Tiefpassfilter sein.

Weitere vorteilhafte und erfindungswesentliche Merkmale ergeben sich aus der Beschreibung von Ausführungsbeispielen anhand der Zeichnungen. Dabei zeigt
- Figur 1: eine Vorrichtung mit Oszillator und Schaltmittel,
- Figur 2: eine Anordnung mit Basisstation und Transponder,
- Figur 3: eine Vorrichtung mit Phasenschieber zum Einsatz als ID-Tag,
- Figur 4: eine Vorrichtung mit einem in seiner Frequenz veränderbaren Oszillator und
- Figur 5: eine Vorrichtung mit Verstärker und Resonator.

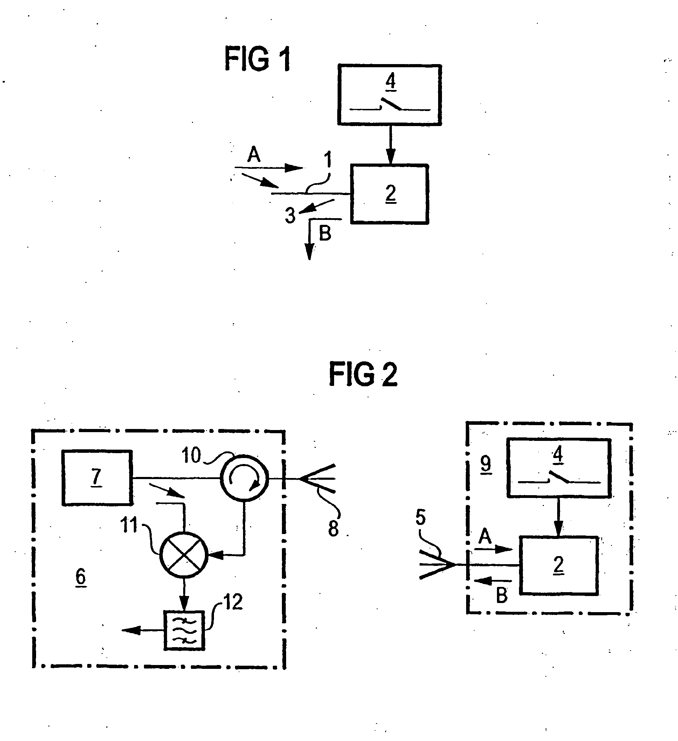

**Figur 1** zeigt die Grundelemente der Vorrichtung. Ein mehr oder weniger großer Teil eines Basissignals A wird über einen Eingang 1 auf einen Oszillator 2 gekoppelt. Für die dargestellten Beispiele wird ein elektrisches Basissignal und Oszillatorsignal zugrunde gelegt. Die Erfindung kann aber auch für optische, akustische oder andere Signale realisiert werden. Das Basissignal A regt den Oszillator 2 quäsiphasenkohärent zu Oszillationen an, wodurch dieser das Signal B erzeugt. Das Signal B wird aus dem Oszillator ausgekoppelt und über einen Ausgang 3 abgeleitet. Der Eingang 1 für das Basissignal A und der Ausgang 4 für das Oszillatorsignal B können ganz oder teilweise identisch sein. Sie können aber auch getrennt voneinander realisiert werden.

Der Oszillator 2 wird mit einem Schaltmittel 4 zur Taktsteuerung zyklisch ein- und ausgeschaltet. Durch das Einund Ausschalten wird auch seine quasiphasenkohärente Anregbarkeit geschaltet.

Der Oszillator 2 ist so ausgebildet, dass er einerseits nicht durch thermisches Rauschen zur Oszillation angeregt wird, dass aber andererseits das auf ihn eingekoppelte Basissignal A ausreicht, um zum Basissignal A quasiphasenkohärente Oszillationen anzuregen.

**Figur 2** zeigt die Anordnung eines Transponder/Backscatter-Systems. Das Basissignal A der Basisstation 6 wird mit einem Basisstationsoszillator 7 generiert und über eine Antenne 8 der Basisstation 6 ausgesendet. Mit der Antenne 5 wird das Basissignal A der Basisstation 6 als Abfragesignal empfangen. Quasikohärent zum Basissignal A wird der geschaltete Oszillator 2 in der oben beschriebenen Art und Weise angeregt und oszilliert um das Oszillatorsignal B zu erzeugen. Das Oszillatorsignal B wird als Antwortsignal über die Antenne 5 des Transponders 9 und zur Antenne 8 der Basisstation 6 zurückgesandt.

Über einen Richtkoppler 10 wird hier das Oszillatorsignal B von dem Basissignal A getrennt und mit einem Teil des Signals vom Basisstationsoszillator 7 in einem Mischer 11 gemischt. Mit einem Filter 12 werden die nicht interessierenden Mischkomponenten unterdrückt. Vorzugsweise wird dieses Filter als Bandpassfilter ausgeführt, wobei die Mittelfrequenz der Taktrate des Schaltmittels 4 entspricht. Die vorgestellte Anordnung kann sowohl zum Zweck der Kommunikation bzw. Identifikation als auch zur Bestimmung der Entfernung bzw. Entfernungsänderung zwischen Basisstation 6 und Transponder 9 verwendet werden.

Wird das System zur Entfernungsmessung verwendet, so enthält die Basisstation 6 vorzugsweise weitere Elemente, wie zum Beispiel einen zusätzlichen Mischer oder einen Gleichrichter und einen Tiefpassfilter, mit dem der Einfluss der Taktrate eliminiert wird. Es kann aber auch mit einer geeigneten Spektralanalyse direkt das Mischsignal ausgewertet werden, wobei der Einfluss der Taktrate zu berücksichtigen ist.

Für eine Entfernungsmessung ist es des weiteren vorteilhaft, wenn der Basisstationsoszillator 7 als in der Frequenz veränderbarer Oszillator, z.B. als VCO (voltage controlled oscillator), ausgeführt wird, so dass das Basissignal A mehr als einen Frequenzwert annehmen kann. Im Prinzip sind alle Ausführungen wie bei einem üblichen Backscatter denkbar, wie sie auch in der deutschen Patentanmeldung 19946161.9 ausgeführt sind, auf die hiermit vollinhaltlich Bezug genommen wird. Der Unterschied der vorliegenden Erfindung zu den bekannten Verfahren besteht in der Art des Transponders, nämlich, dass das Basissignal, das durch die Übertragung von der Basisstation zum Transponder schon deutlich im Signalpegel gedämpft ist, nicht einfach zurückgespiegelt wird, sondern mit einer eigenen quasiphasenkohärenten Quelle nahezu rauschfrei aktiv konstruiert erzeugt und dann mit dem vollen Pegel der Quelle zurückgesendet wird. Das erfindungsgemäße System hat bei sonst ähnlicher Funktion daher eine signifikant höhere Reichweite bzw. ein signifikant höheres Signal-Rausch-Verhältnis als die Systeme nach dem Stand der Technik.

Wird der Transponder 9 zu Identifikation als ID-Tag oder zur Kommunikation verwendet, so kann die Codierung zum Beispiel durch die Taktrate des Schaltmittels 4 erfolgen und/oder durch eine zusätzliche Modulationseinheit, mit der das quasiphasenkohärente Oszillatorsignal vor dem Zurücksenden moduliert wird. Die Art der Modulation kann dem allgemeinen Stand der Technik entsprechen, auf den schon oben verwiesen wurde. Durch die Quasiphasenkohärenz der beiden Trägersignale, also von Basissignal A und Oszillatorsignal B, ist die Demodulation in der Basisstation 6 einfach und störsicher zu realisieren. Zusätzlich ergeben sich die schon erwähnten Vorteile gegenüber normalen Backscatter-ID-Systemen für größere Reichweite. Auf Regelkreise für eine etwaige Trägerrückgewinnung kann bei der erfindungsgemäßen Anordnung verzichtet werden.

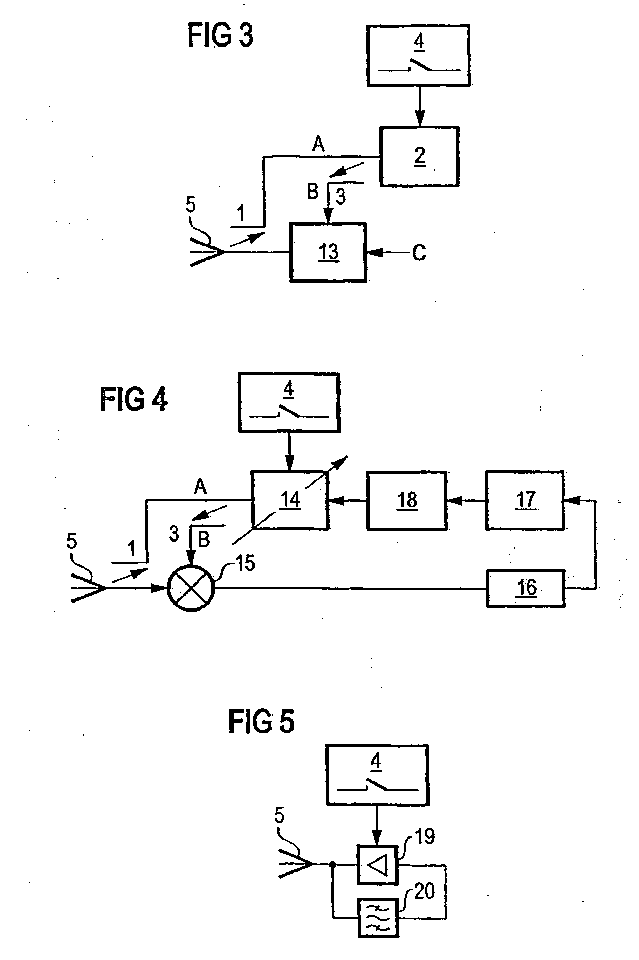

Unter Verwendung der Anordnung lässt sich die Codierung eines ID-Tags etwa mit einer Phasenmodulation umsetzen. Eine mögliche Ausführung zeigt **Figur 3**. Das dargestellte System ist gegenüber den vorhergehenden Transponderschaltungen lediglich um einen Modulator/Phasenschieber 13 erweitert worden. Je nach Codewert C wird das quasiphasenkohärente Oszillatorsignal um einen bestimmten Phasenwert verzögert. Bei einer binären Codierung ist dies zum Beispiel um 90° oder 180° beim Codewert 1 und um 0° beim Codewert 0. Eine Amplituden- oder Frequenzcodierung ist dabei ebenso denkbar. Auch bei diesen Arten der Modulation ergeben sich die Vorteile bezüglich der Demodulation in der Basisstation.

Die Kohärenzzeitlänge ist von der Frequenzdifferenz zwischen Basissignal A und Oszillatorsignal B abhängig, das heißt, von der Frequenzdifferenz zwischen dem Oszillator 2 und dem Basisstationsoszillator 7. Je genauer die Frequenzen der Oszillatoren übereinstimmen, desto länger sind die Phasen der Oszillatoren nahezu gleich. Um die Kohärenzzeitlänge zu vergrößern und damit die Taktrate des Schaltmittels 4 gering halten zu können, kann es vorteilhaft sein, Mittel vorzusehen, die dazu geeignet sind, die Oszillationsfrequenz des Oszillators 2 adaptiv an die Frequenz des Basissignals A anzupassen. Eine mögliche Ausführung dazu zeigt **Figur 4**. Anders als in der Basisschaltung aus Figur 1 besitzt diese Vorrichtung keinen Festfrequenzoszillator, sondern einen in der Frequenz veränderbaren Oszillator 14. Mit Hilfe eines Mischers 15 wird ein Teil des Oszillatorsignals B des in seiner Frequenz veränderbaren Oszillators 14 mit dem Basissignal A gemischt. Mit einem Filter 16, vorzugsweise einem Tiefpassfilter, wird das Differenzmischsignal extrahiert. Die Frequenz des Differenzmischsignals, die ein Maß für die Frequenzabweichung der beiden Oszillatoren ist, wird dann im Anschluss an eine Signalvorverarbeitung 17 als Stellgröße einem Regler oder eine Steuerung 18 zugeführt. Der Regler oder die Steuerung 18 stellt den Oszillator 14 so nach, dass die Frequenzabweichung der beiden Oszillatoren 14, 7 möglichst minimal wird. Die Hauptaufgabe der Signalvorverarbeitung 17 besteht in der Frequenzbestimmung. Die Frequenzbestimmung kann im Prinzip mit einer beliebigen Schaltung bzw. Signalverarbeitung nach dem Stand der Technik durchgeführt werden. Ebenso ist der Regler oder die Steuerung 18 nach dem Stand der Technik auszulegen. Ausdrücklich sei hierbei aber darauf hingewiesen, dass lediglich die Frequenz gesteuert bzw. geregelt werden muss, die Phasenkohärenz ergibt sich durch den erfindungsgemäßen Aufbau der Vorrichtung. Auf eine Phasenregelschleife kann daher verzichtet werden. Da im Allgemeinen keine Notwendigkeit besteht, die Taktrate des Schaltmittels 4 besonders niederfrequent zu wählen, muss der Regler oder die Steuerung 18 des Oszillators 14 auch nicht sonderlich exakt erfolgen. Bei der eingangs genannten Grenze für eine kleine Phasenabweichung von n/10 reicht es, wenn die Frequenzabweichung 10 mal kleiner ist als die Taktfrequenz des Schaltmittels 4.

Im Zahlenbeispiel: Wird die Funkstrecke bei 24 GHz realisiert und der Oszillator 2, 14 des Transponders 9 mit 100 MHz geschaltet, so dürfen der 24 GHz Basisstationsoszillator 7 und der 24 GHz Oszillator 2, 14 um bis zu 10 MHz in der Frequenz voneinander abweichen. Nach jedem Einschalten es Oszillators 2, 14 schwingt dieser in der Kohärenzzeit von 5 ns über 120 Perioden quasiphasenkohärent zu dem Basissignal A, das heißt, die maximale Abweichung beträgt π/10. Nach Ausschalten und erneutem Einschalten ergeben sich wiederum 120 quasiphasenkohärente Schwingungen usw. Aus informationstechnischer Sicht sind das Basissignal A und das Oszillatorsignal B somit über einen längeren Zeitraum quasiphasenkohärent.

Bei der Wahl des Oszillators 2, 14 ist zu beachten, dass seine Einschwingzeit klein gegenüber der Kohärenzzeitlänge sein sollte. Die Güte des Oszillators 2, 14 sollte daher nicht zu groß gewählt werden. Bezogen auf das zuvor genannte Zahlenbeispiel bedeutet das zum Beispiel für einen 24 GHz Oszillator mit zum Beispiel einer Güte von 10, dass er in etwa 400 ps anschwingt, was deutlich kürzer als die Kohärenzzeitlänge von 5 ns ist. Die Güte sollte allerdings auch nicht zu gering ausgelegt werden, da Oszillatoren mit geringer Güte üblicherweise ein hohes Phasenrauschen aufweisen. Ein hohes Phasenrauschen kann aber, wie vorne dargelegt wurde, die Kohärenzzeitlänge unnötig verkürzen. Bei der Wahl des Oszillators 2, 14 ist ein in diesem Sinn geeigneter Kompromiss zu treffen.

Im Mikrowellenbereich werden Oszillatoren üblicherweise als Resonanzkreis ausgeführt. Wie aus **Figur 5** ersichtlich ist, besteht ein solcher Resonanzkreis aus einem Hochfrequenztransistor 19 zur Verstärkung und einem Resonator 20 bzw. einem Bandpassfilter. Der Resonator 20 ist zum Beispiel ein LC-Schwingkreis oder eine dielektrische Struktur. Die Schaltung kann zum Beispiel in Mikrostrip- oder auch in Koplanartechnik aufgebaut sein. Wird der Oszillator mit einer Antenne 5 verbunden, so ist er für das beschriebene Prinzip besonders empfänglich. Geschaltet wird der Oszillator zum Beispiel dadurch, dass der Verstärker 19 mit dem Schaltmittel 4 ein- und ausgeschaltet wird.

Besonders eignet sich die Erfindung für Mikrowellensysteme mit Betriebsfrequenzen über 10 GHz, da nach dem derzeitigen Stand der Technik die Möglichkeiten zur direkten Phasenregelung des Trägers eingeschränkt bzw. sehr aufwendig und teuer sind.

Anzumerken ist, dass die generelle Kohärenz zwischen Basissignal und Oszillatorsignal lediglich durch das Phasenrauschen des Oszillators 2, 14 und des Basisstationsoszillators 7 begrenzt wird. Denn auch wenn die Frequenzen der beiden Oszillatoren unterschiedlich sind, so bleibt doch der Phasenzusammenhang zwischen den Signalen nach dem Einschaltvorgang, bis auf das Phasenrauschen, deterministisch. Im Prinzip sind also alle Ausführungen, die in der vorliegenden Erfindung genannt sind, auch auf langsamere Schalttakte übertragbar, also solche Kohärenzzeitlängen, die nur durch das Phasenrauschen bestimmt werden. Es muss in diesem Fall bei den Verfahren nur dafür Sorge getragen werden, dass die zeitliche Phasenänderung, die sich aufgrund des Frequenzunterschiedes der beiden Oszillatoren ergibt, in der Auswertung berücksichtigt bzw. kompensiert wird. Dies kann zum Beispiel hardwareseitig durch zusätzliche Mischer/Demodulatoren oder softwareseitig durch eine geeignete Frequenz- und Phasenauswertung erfolgen. Wie zuvor dargestellt wurde, kann dieser Zusatzaufwand vorteilhaft dadurch vermieden werden, dass der anzukoppelnde Oszillator hinreichend schnell ein- und ausgeschaltet wird.

## Patentansprüche

1. Anordnung mit einer Vorrichtung zur Erzeugung eines Oszillatorsignals (B) basierend auf einem Basissignal (A) mit
- einem Oszillator (2, 14) zur aktiven Konstruktion des Oszillatorsignals (B) durch Oszillationen,
- einem Eingang (1) für das Basissignal (A) und
- einem Ausgang (3) für das erzeugte Oszillatorsignal (B), wobei
- der Oszillator (2) durch das Basissignal (A) zur Erzeugung des Oszillatorsignals (B) quasiphasenkohärent zum Basissignal (A) anregbar ist,
- die Vorrichtung ein Schaltmittel (4) zum Schalten der quasiphasenkohärenten Anregbarkeit des Oszillators (2) aufweist und
- das Schaltmittel (4) so ausgebildet ist, dass der Oszillator (2) in einer vorgegebenen Folge mit einer Taktrate schaltbar ist,
und mit einer Basisstation (6) zum Empfangen des Oszillatorsignals (B),
**dadurch gekennzeichnet,**
**dass** die Basisstation (6) ein Bandpassfilter (12) aufweist, dessen Mittenfrequenz in etwa der Taktrate entspricht.
